# EUROPÄISCHE PATENTANMELDUNG

(11) **EP 0 974 736 A1**
(43) Veröffentlichungstag der Anmeldung: **26.01.2000**
(21) Anmeldenummer: 98810709.0
(22) Anmeldetag: 22.07.1998
(51) Int. Cl.: F01D 25/26, F01D 11/00, F16J 15/44

(54) **Kolbenringdichtung an Dampfturbine**

(71) Anmelder: Asea Brown Boveri AG, 5401 Baden (CH)
(72) Erfinder: Kukalj, Ivan, 5403 Baden (CH)
(74) Vertreter: Klein, Ernest

(57) **Zusammenfassung**

Eine Dampfturbine der Zweischalenbauart weist eine Dampfdurchführung auf, die durch das Innen- und Aussengehäuse (3, 6) führt. Zwischen einem Entnahmestutzen (5) und dem Aussengehäuse (6) ist eine Kolbenringdichtung (7) angeordnet, die einen einzigen Dichtungsring (9) aufweist. Der Dichtungsring (9) ist in einer ringförmigen Nut (8) im Aussengehäuse (6) angeordnet, wobei diese zwei Federn (11) in Bohrlöchern (19) aufweist, auf denen der Dichtungsring (9) liegt. Zwischen der unteren Fläche (15) des Dichtungsrings (9) und dem Boden (16) der Nut (8) sowie zwischen der inneren Wand (17) der Nut (8) und der inneren Wand (18) des Dichtungsrings (9) besteht ein freier Raum, in dem der Druck der Dampfdurchführung herrscht, welcher höher ist als der Druck im Zwischenraum zwischen Innen- und Aussengehäuse. Die Dichtung ergibt sich durch Flächenpressung zwischen der oberen Fläche (13) des Dichtungsrings (9) und der Randfläche des Entnahmestutzens (5) und der äusseren Wand des Rings (9) und der äusseren Wand der Nut (12), wobei eine Wärmebeweglichkeit in radialer und axialer Richtung gewährt ist. Die Dichtung zeichnet sich durch wenige Komponenten und eine vereinfachte Montage aus.

## Beschreibung

### Technisches Gebiet

Die Erfindung betrifft eine Dampfturbine der Zweischalenbauart mit einem Innen- und Aussengehäuse und einer Dampfdurchführung zur Entnahme von Dampf, welche durch beide Gehäuse führt. Die Erfindung betrifft insbesondere eine Kolbenringdichtung zur Dichtung der Kontaktstelle zwischen dem Innen- und Aussengehäuse, weiche wärmebeweglich ist, indem sie ihre dichtende Funktion bei thermischen Dehnungsbewegungen der Gehäuseteile beibehält und ihre Bestandteile den Belastungen der Dehnungsbewegungen widerstehen.

### Stand der Technik

Dampfturbinen sind mit Dampfdurchführungen versehen, um Entnahmedampf beispielsweise einer Speisewasservorwärmung, einer Zwischenüberhitzung von Dampf im Dampfkreislauf oder nach Entspannung einer weiteren Druckstufe der Dampfturbine zuzuführen.
Dampfturbinen für höhere Drücke und Temperaturen weisen eine Zweischalenbauweise auf, bei welcher innerhalb eines Aussengehäuses ein Innengehäuse gelagert ist und innerhalb des Innengehäuses der Entspannungsraum zwischen den Laufschaufeln am Rotor und den Leitschaufeln am inneren Umfang des Innengehäuses sich befindet. Es besteht hier eine Druck- und Temperaturstufung von innen nach aussen, wodurch die verschiedenen Gehäuseteile weniger belastet werden. Beim Anfahren oder Herunterfahren der Dampfturbine ergeben sich thermische Ausdehnungen und Schrumpfungen, wobei das Ausmass der Dehnungsbewegungen der verschiedenen Gehäuseteile unterschiedlich ist. Aus diesem Grunde ist es erforderlich, dass die Dichtung zwischen dem Innengehäuse und dem Dampfrohr, das sich am Aussengehäuse befindet, radial sowie axial wärmebeweglich ist und zugleich ihre dichtende Funktion beibehält.
Die Dampfdurchführung zur Entnahme von Dampf aus dem Entspannungsraum wird zum Beispiel durch zwei Zapfen realisiert, wovon der erste Zapfen durch das Innengehäuse und der zweite Zapfen durch das Aussengehäuse führt, wobei die zwei Zapfen über eine Kolbenringdichtung verbunden sind.
Eine bekannte realisierte Dichtung dieser Art besteht aus mehreren einzelnen Ringen wie zum Beispiel Sicherungsringen, Dichtungs- oder Kompressionsringen, Scherringen und Führungsringen. Sämtliche dieser Teile sind einzeln aus zunderbeständigem Material wie zum Beispiel Stelit gefertigt. Die Teile sind zu einem sogenannten Dichtungslabyrinth angeordnet, wobei die dichtenden Teile, wie bei allen Dichtungen üblich, durch die vorherrschenden Druckunterschiede selbstdichtend sind. Die einzelnen Ringe erlauben jeweils entweder radiale oder axiale Dehnungsverschiebungen, wobei diese durch die gegebenen Dimensionen der Ringe und deren Führungsräume begrenzt sind.
Diese Art Dichtungsringkombination als Dichtungslabyrinth wird jeweils für jeden Typ von Dampfdurchführung je nach Druck- und Dehnungsverhältnissen und Anwendung der Durchführung verschieden ausgelegt, realisiert und montiert.
Steht ist als zunderbeständiges Material im Vergleich zu anderen Materialien relativ teuer. Bei einer mehrteiligen Dichtung wie die des beschriebenen Standes der Technik wirken sich einerseits die Materialkosten nachteilig aus, anderseits ist der Fertigungs- und Montageaufwand gemäss dieser Anzahl entsprechend hoch.

### Darstellung der Erfindung

Es ist hieraus der Erfindung die Aufgabe gestellt, eine Kolbenringdichtung für eine Dampfdurchführung an einer Dampfturbine der Zweischalenbauart zu schaffen, die in ihrer Ausführung im Vergleich zum beschriebenen Stand der Technik einfacher ausgebildet ist und dadurch für ihre Fertigung und Montage weniger Aufwand erfordert und kostengünstiger ist. Weiter soll die Kolbenringdichtung für thermische Dehnungsverschiebungen bezüglich der Turbinenwelle in axialer und radialer Richtung im Vergleich zum Stand der Technik einen grösseren Dehnungsbereich gewähren.
Diese Aufgabe wird gemäss dem Hauptanspruch durch eine Kolbenringdichtung zur Abdichtung der ersten Druckstufe zwischen der Dampfdurchführung und dem Raum zwischen Innen- und Aussengehäuse gelöst, die einen einzigen Dichtungsring und mindestens zwei Federn aufweist, wobei die Federn in Bohrlöchern in einer ringförmigen Nut im Aussengehäuse angeordnet sind und der Dichtungsring auf den Federn liegend in dieser Führungsnut angeordnet ist. Die Fläche des Dichtungsrings, die dem Innengehäuse und dem Entnahmestutzen zugewandt ist, liegt dabei flach auf der Randfläche des Entnahmestutzens auf und die äussere Wand des Dichtungsrings wird an die äussere Wand der Nut gepresst.
Der Dichtungsring sitzt auf den in den Bohrlöchern im Boden der Nut angeordneten Federn, wobei die Federn so dimensioniert sind, dass die untere Fläche des Dichtungsringes über dem Boden der Ringnut liegt und dort ein Zwischenraum besteht. Die Ringnut ist in ihrer Breite im Vergleich zum Dichtungsring leicht grösser dimensioniert, wobei die äussere Wand des Dichtungsrings der äusseren Wand der Nut anliegt. Bei Anordnung des Dichtungsrings in der Ringnut ergibt sich zwischen der inneren Wand der Ringnut und dem Dichtungsring ein Zwischenraum. In dem freien Raum zwischen Dichtungsring und Nut herrscht der Druck der Dampfdurchführung, wodurch der Dichtungsring an die Wand der Ringnut sowie an die Randfläche des Entnahmestutzens gepresst wird.

Die Abdichtung der Dampfdurchführung höheren Druckes gegenüber dem Raum niederen Druckes zwischen dem Innen- und Aussengehäuse ergibt sich durch Flächenpressung in axialer sowie in radialer Richtung an zwei senkrecht aufeinander liegenden Flächen. Die erste Druckfläche mit Flächenpressung in axialer Richtung befindet sich zwischen der äusseren Seitenwand des Dichtungsrings, die der Achse der Dampfdurchführung abgewandt ist und der äusseren Ringfläche der Ringnut. Die zweite Druckfläche mit Flächenpressung in radialer Richtung befindet sich zwischen der dem Innengehäuse zugewandten Fläche des Dichtungsrings und der Randfläche des Entnahmestutzens. In dem Zwischenraum zwischen der inneren Seitenwand der Ringnut und der inneren Seitenwand des Dichtungsrings sowie unter dem Boden des Dichtungsrings und im Bereich der Federn herrscht der höhere Druck der Dampfdurchführung. Durch diesen höheren Druck gegenüber dem Druck außerhalb der Dampfdurchführung wird einerseits der Dichtungsring an die äussere Wand der Ringnut und anderseits seine obere Fläche an die Randfläche des Entnahmestutzens gepresst.
Im Fall von thermischen Dehnungsverschiebungen der Gehäuseteile verschieben sich die dichtenden Flächen in axialer sowie in radialer Richtung, wobei die Primärbewegung zwischen dem Kolbenring und dem Turbinengehäuse in der axialen Richtung ist. Der mögliche Bereich der Dehnungsverschiebungen, worin die Dichtung gewährt ist, ist in axialer Richtung gleich der Randbreite des Entnahmestutzens und in radialer Richtung gleich der Höhe der Ringnut. Diese sind dabei so dimensioniert, sodass eine Dichtung über die maximale mögliche Dehnungsverschiebung gewährt ist. Der Spielraum für thermische Dehnungsverschiebungen ist im Vergleich zum Stand der Technik stark vergrößert.

Spezielle Ausführungen der Kolbenringdichtung sind in den Unteransprüchen festgehalten.

Ein Vorteil der Erfindung besteht darin, dass die Kolbenringdichtung einen einzigen Dichtungsring anstelle von mehreren verschiedenen Dichtungsringen besitzt. Der einzige Dichtungsring ist dabei einfach zu fertigen und montieren, wodurch die Realisierung der Dichtung bedeutend kostengünstiger ist.
Ein zweiter Vorteil liegt in den stark vergrösserten Kontaktflächen der Dichtung. Dies ergibt einerseits den Vorteil, dass die Bestandteile weniger beansprucht werden und dadurch ihre Einsatzdauer verlängert wird. Anderseits ist durch die vergrösserte Kontaktfläche der Bereich für thermische Dehnungsverschiebungen, in dem die Dichtung gewährt ist, ebenfalls vergrössert.
Schliesslich erlauben die vergrösserten Kontaktflächen eine vielseitigere Anwendbarkeit dieser Kolbenringdichtung in mehreren verschiedenen Typen und Grössen von Dampfdurchführungen, ohne dass die Auslegung der Dimensionen der Dichtung stark verändert werden muss.

### Kurze Beschreibung der Zeichnungen

Es zeigen:
Figur 1 eine Ansicht des Entnahmestutzens und eines Teils des Aussengehäuses in Verbindung mit der erfindungsgemässen Kolbenringdichtung,
Figur 2 einen Querschnitt durch die erfindungsgemässe Kolbenringdichtung gemäss einer ersten Ausführung,
Figur 3a einen Querschnitt und Figur 3b eine Perspektive der erfindungsgemässen Kolbenringdichtung gemäss einer zweiten Ausführung,
Figur 4 eine weitere Ausführung der Kolbenringdichtung mit zwei Dichtungsringen.

### Weg der Ausführung der Erfindung

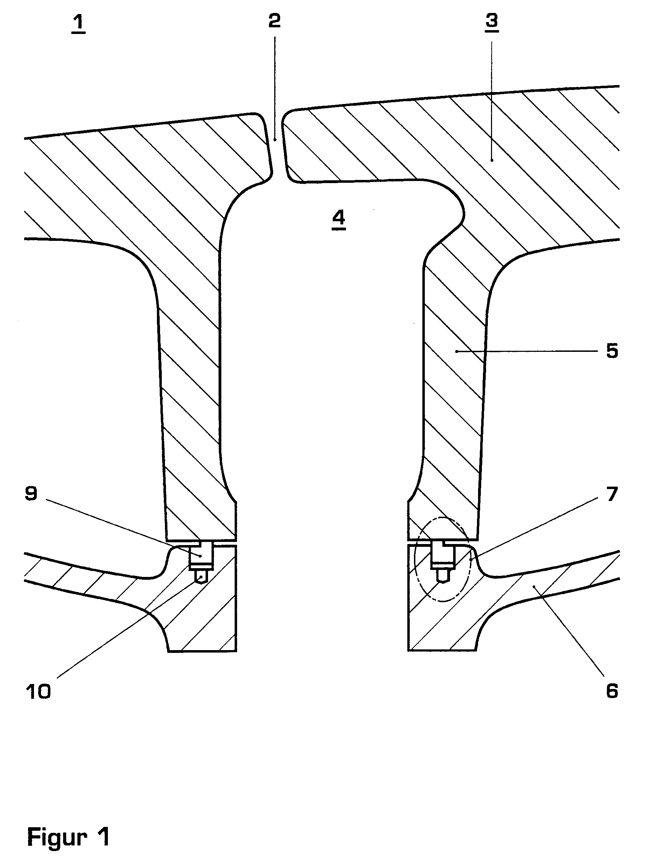

Figur 1 zeigt einen Querschnitt einer Dampfdurchführung in einer Dampfturbine der Zweischalenbauart. Der Turbinenschaufelraum 1 ist hier von einem Innengehäuse 2 und einem Aussengehäuse 6 umgeben. Vom Turbinenschaufelraum 1 führt ein Dampfentnahmeschlitz 2 durch das Innengehäuse 3 in einen Sammelraum 4. Vom Sammelraum 4 strömt der Entnahmedampf durch einen Entnahmestutzen 5, der Teil des Innengehäuses 3 ist und zum Aussengehäuse 6 führt. Zwischen dem Entnahmestutzen 5 und dem Aussengehäuse 6 ist die Dampfdurchfürhung durch die Kolbenringdichtung 7 abgedichtet. Diese besteht aus einem einzigen Dichtungsring 9, der in einer ringförmigen Nut im Aussengehäuse 6 angeordnet ist. Im Boden der Nut befinden sich zwei Bohrlöcher 10, in denen je eine Feder angeordnet ist und auf denen der Dichtungsring 9 liegt. Die dem Entnahmestutzen 5 zugewandte Fläche des Dichtungsringes 9 liegt flach und direkt auf der Randfläche des Entnahmestutzens 5.

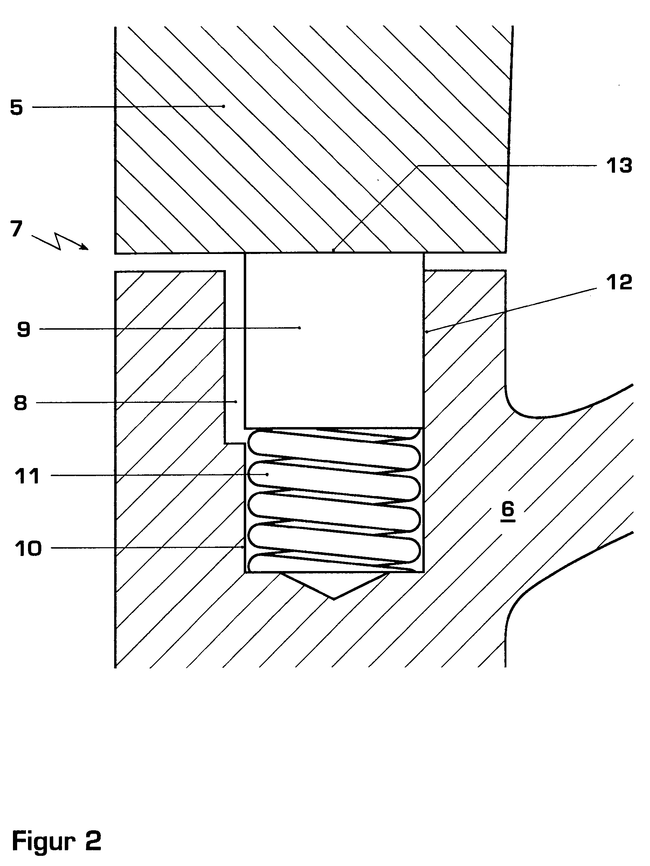

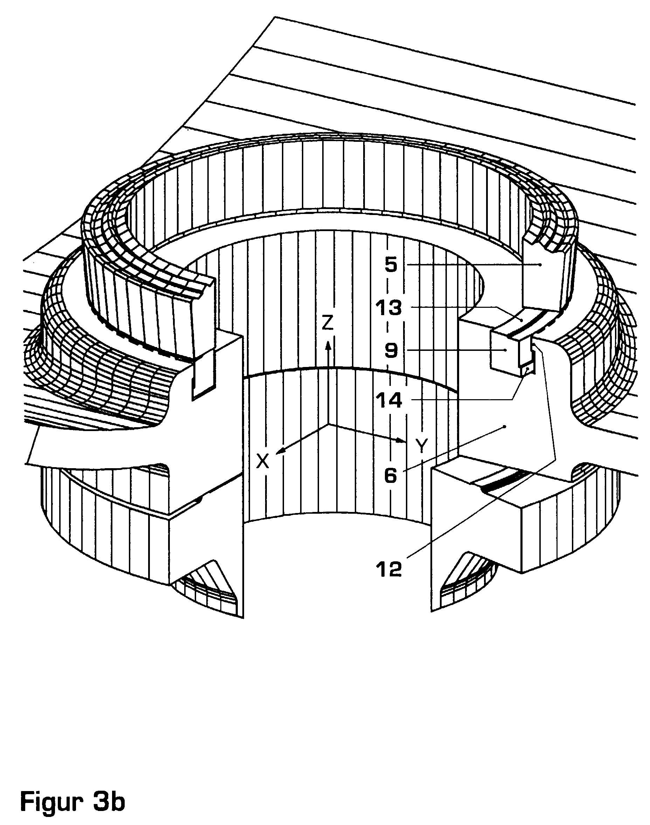

Figur 2 zeigt im Detail einen Querschnitt durch die erfindungsgemässe Kolbenringdichtung 7 zwischen dem Rand des Entnahmestutzens 5 und dem Aussengehäuse 6. Das Aussengehäuse 6 weist an seiner dem Entnahmestutzen 5 zugewandten Seite eine ringförmige Nut 8 mit rechteckigem Querschnitt auf, welche an mindestens zwei Stellen ein Bohrloch 10 aufweist. In jedem dieser Bohrlöcher 10 ist eine Feder 11, zum Beispiel eine Spiralfeder angeordnet, auf welcher der Dichtungsring 9 liegt, wobei dieser ebenfalls einen rechteckigen Querschnitt aufweist. In der Ausführung in Figur 1 sind zwei Bohrlöcher für Federn gezeigt. Ausführungen der Dichtung mit mehr als zwei Bohrlöchern mit Federn sind jedoch auch denkbar. Die Federn 11 sind dabei so dimensioniert, dass bei Aufliegen des Dichtungsrings 9 ein Zwischenraum zwischen der unteren Fläche 15 des Dichtungsrings 9 und dem Boden 16 der ringförmigen Nut 8 besteht.
Die Breite der ringförmigen Nut 8 ist leicht grösser als die des Dichtungsrings. Hierzu ist der innere Durchmesser der Nut 8 leicht kleiner als der innere Durchmesser des Dichtungsrings 9, sodass sich ein freier Raum zwischen der inneren Wand 17 der Nut 8 und der inneren Wand 18 des Dichtungsrings 9 (in der Figur 3b an der linken Seite des Dichtungsrings) ergibt. In dem Zwischenraum zwischen dem Dichtungsring und der inneren Seite und dem Boden der Ringnut sowie in den Bohrlöchern für die Federn herrscht der Druck p₁ der Dampfdurchführung. Dieser Druck P1 ist höher als der Druck p₂ zwischen Innen- und Aussengehäuse, wodurch der Dichtungsring 9 nach aussen gegen die äussere Wand der Ringnut 8 gepresst wird. Es ergibt sich an der Fläche 12 eine Flächenpressung in axialer Richtung parallel zur Turbinenwelle. Ebenso ergibt sich an der Fläche 13 zwischen dem Dichtungsring und der Randfläche des Entnahmestutzen eine Flächenpressung in radialer Richtung zur Welle.
In der hier gezeigten ersten Ausführung der Erfindung weist der Dichtungsring 9 einen rechteckigen Querschnitt auf Hier ist die Fläche 13 an der oberen Seite des Dichtungsrings 9 gleich der Fläche 15 an der unteren Seite des Rings und der Druck auf den Entnahmestutzen 5 über der Kontaktfläche 13 gleich dem auf die untere Fläche 15. Die Kontaktfläche 12 zwischen der äusseren Wand des Dichtungsrings 9 und der Ringnut 8 ist leicht grösser als die innere Wandfläche 17 des Rings 9, wobei der Druck auf die Ringnut 8 leicht kleiner ist als der an der inneren Wand 18 des Rings.

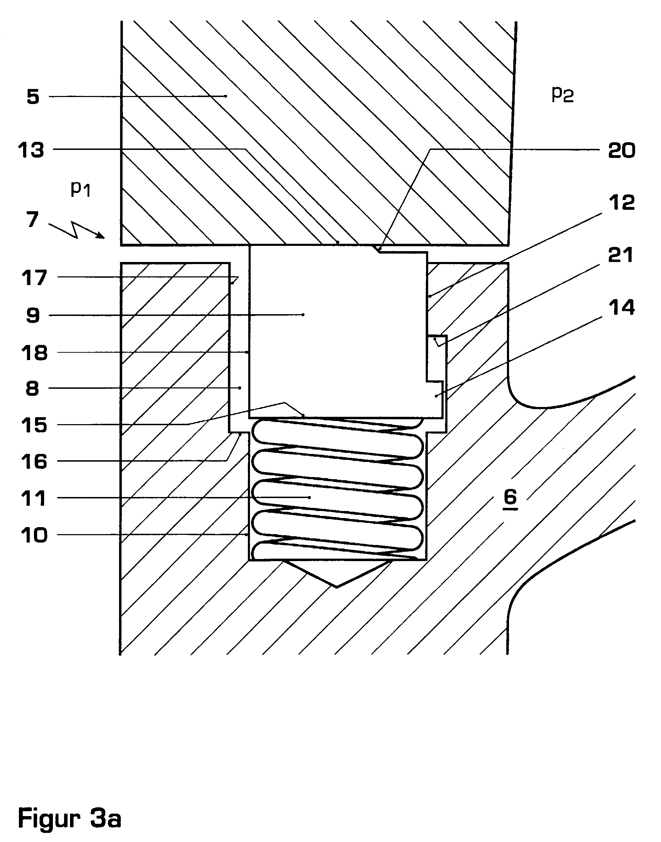

In den Figuren 3a und 3b ist eine zweite und bevorzugte Ausführung der Erfindung gezeigt. Sie unterscheidet sich von der Ausführung in Figur 2, indem die Fläche 12 mit axialer Flächenpressung im Vergleich zur ersten Ausführung kleiner dimensioniert ist. Hierzu weist der Dichtungsring 9 an seiner oberen Seite eine leichte Stufe 20 auf, sodass die Breite der Fläche 13, welche radial auf die Randfläche des Entnahmestutzens 5 gepresst wird, kleiner ist als die Breite des Dichtungsrings 9 selbst.
Durch die kleinere Kontaktfläche ist die Druckwirkung an der dichtenden Fläche 13 im Vergleich zur ersten Ausführung erhöht. Beispielsweise beträgt das Verhältnis der dichtenden Fläche 13 zur unteren Fläche des Dichtungsrings 0.5, wodurch die Kraft pro Fläche an der Dichtung in radialer Richtung verdoppelt wird.
Die Flächenpressung ist hier auch in axialer Richtung in ähnlicher Weise erhöht. Die äussere Wand der Nut 8 weist eine kleine Stufe 21 auf, sodass die Fläche 12 des Dichtungsrings 9, welche axial auf die Nut gepresst wird, kleiner ist als in der Ausführung von Figur 2. Die Kraft pro Fläche des Dichtungsrings auf die Wand der Nut 8 ist dadurch an der axialen Kontaktfläche 13 in gleicher Weise erhöht. Die Erhöhung des Druckes entspricht dem Verhältnis zwischen der Fläche 12 in Figur 2 und der reduzierten Fläche 12 in Figur 3.

Bei der erfindungsgemässen Kolbenringdichtung sind verschiedene Grössen des Dichtungsrings möglich. In einer bevorzugten Ausführung ist jedoch zumindest das Verhältnis von radialer Flächenpressung an der Fläche 13 zu axialer Flächenpressung an der Fläche 12 grösser als 1. Je nach Grösse des Ringspaltes zwischen Entnahmestutzen und Aussengehäuse, des Reibungskoeffizienten zwischen Dichtung und Entnahmestutzen sowie des Durchmessers und Querschnitts des Dichtungsrings sind zwei oder mehr Federn notwendig, um den Dichtungsring genügend an den Entnahmestutzen zu drücken.
Die Kontaktflächen 12 und 13 werden einerseits so reduziert, dass die Flächenpressung gross genug ist, um eine Dichtung bei einem gegebenen Druckunterschied zwischen Dampfdurchführung und dem Raum zwischen den Gehäusen und einem gegebenen Durchmesser der Dampfdurchführung zu gewährleisten. Anderseits werden die Kontaktflächen so gross wie möglich gewählt, um den Verschleiss der Kontaktteile möglichst zu verringern. Die maximale Grösse der Kontaktfläche 13 mit radialer Flächenpressung hängt dabei vom Querschnitt des Dichtungsrings 9 ab, und die Grösse der Kontaktfläche 12 mit axialer Flächenpressung ist innerhalb des Bereichs der Höhe des Dichtungsrings 9 zu variieren.
Bei der Montage der Kolbenringdichtung wird der Dichtungsring 9 mittels den Spiralfedern 11 gegen den Entnahmestutzen 5 gepresst. Die in Figur 3a und b gezeigte Ausführung weist an der äusseren Wand des Dichtungsrings 9 eine Stufe 14 auf. Diese dient dazu, dass der Dichtungsring 9 und die Federn 11 bei der Montage der Kolbenringdichtung 7 nicht aus dem Turbinengehäuse fallen.

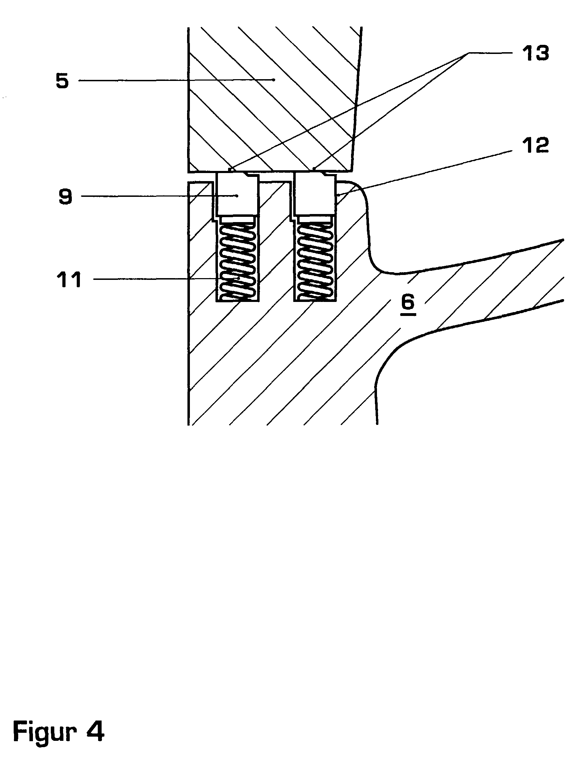

In Figur 4 ist eine Variation der erfindungsgemässen Kolbenringdichtung gezeigt. Hier sind anstelle von einer Kolbenringdichtung deren zwei angeordnet, wobei jede wiederum einen auf Spiralfedern 11 liegenden Dichtungsring 9 aufweist. Ein zweiter Dichtungsring dient zur Sicherheit für den Fall, dass der erste Dichtungsring durch Verschleiss oder sonstige Beschädigung undicht wird.

### Bezugszeichenliste

- 1: Turbinenschaufelraum
- 2: Entnahmeschlitz
- 3: Innengehäuse
- 4: Sammelraum
- 5: Entnahmestutzen
- 6: Aussengehäuse
- 7: Kolbenringdichtung
- 8: Nut
- 9: Dichtungsring
- 10: Bohrloch
- 11: Feder
- 12: axiale Druckfläche
- 13: radiale Druckfläche
- 14: Stufe am Dichtungsring
- 15: untere Fläche des Dichtungsrings
- 16: Bodenfläche der Nut
- 17: innere Wand der Nut
- 18: innere Wand des Dichtungsrings
- 20: Stufe an der oberen Fläche des Dichtungsrings
- 21: Stufe an der äusseren Wand der Nut

## Patentansprüche

1. Dampfturbine der Zweischalenbauart mit einem Innengehäuse (3) und einem Aussengehäuse (6) und einer Dampfdurchführung zwecks Dampfentnahme, die vom Turbinenschaufelraum (1) der Dampfturbine durch das Innengehäuse (3) und Aussengehäuse (6) führt, wobei ein Entnahmestutzen (5) vom Innengehäuse (3) zum Aussengehäuse (6) führt und zwischen dem Entnahmestuzen (5) und dem Aussengehäuse (6) eine Kolbenringdichtung (7) angeordnet ist
dadurch gekennzeichnet, dass
die Kolbenringdichtung (7) einen einzigen Dichtungsring (9) und mindestens zwei Federn (11) aufweist und das Aussengehäuse (6) an der dem Entnahmestutzen zugewandten Fläche eine ringförmige Nut (8) mit mindestens zwei Bohrlöchern (10) aufweist, wobei die Federn (11) in den Bohrlöchern (10) positioniert sind und der Dichtungsring (9) in der Nut (8) auf den Federn (11) liegend angeordnet ist und zwischen dem Boden (16) der Nut (8) und der unteren Seite (15) des Dichtungsrings (9) sowie zwischen der inneren Wand (17) der Nut (8) und der inneren Wand (18) des Dichtungsrings (9) ein freier Zwischenraum besteht, sodass durch den Druckunterschied zwischen Entnahmestutzen (5) und dem Raum zwischen Innen- und Aussengehäuse (3, 6) die obere Fläche (13) des Dichtungsrings (9), die dem Entnahmestutzen (5) zugewandt ist, dichtend gegen die Randfläche des Entnahmestutzens (5) und die äussere Wand des Dichtungsrings (9) dichtend gegen die äussere Wand (12) der Nut (8) gepresst werden.

2. Dampfturbine nach Anspruch 1
dadurch gekennzeichnet , dass
der Querschnitt des Dichtungsrings (9) eine rechteckige Form aufweist.

3. Dampfturbine nach Anspruch 1
dadurch gekennzeichnet, dass
die obere Seite des Dichtungsrings (9), die dem Entnahmestutzen (5) zugewandt ist, eine leichte Stufe (20) aufweist, wodurch die Fläche (13) des Dichtungsrings (9), welche mit der Randfläche des Entnahmestutzens (5) in Kontakt ist, kleiner ist als die untere Fläche (15) des Dichtungsrings (9) und der Druck auf die Randfläche des Entnahmestutzens (5) grösser ist als der Druck auf die untere Fläche (15) des Dichtungsrings (9).

4. Dampfturbine nach Anspruch 1 oder 3
dadurch gekennzeichnet, dass
die äussere Wand der Nut (8) eine leichte Stufe aufweist und die Fläche (12) der äusseren Wand der Nut (8), welche mit dem Dichtungsring (9) in Kontakt ist, kleiner ist als die Fläche der inneren Wand (17) des Dichtungsrings (9) und der Druck auf die äussere Wand der Nut (8) grösser ist als der Druck auf die innere Wand (17) des Dichtungsrings (9).

5. Dampfturbine nach Anspruch 4
dadurch gekennzeichnet, dass
der Dichtungsring (9) am unteren Rand seiner äusseren Seite einen Vorsprung (14) aufweist.

6. Dampfturbine nach Anspruch 4
dadurch gekennzeichnet, dass
das Verhältnis von radialer Flächenpressung an der Fläche (13) des Dichtungsrings (9), welche mit dem Entnahmestutzen (5) in Kontakt ist, zur axialen Flächenpressung an der äusseren Wandfläche (12) der Nut (8) grösser als 1 ist.

7. Dampfturbine nach einem der Ansprüche 1-5
dadurch gekennzeichnet, dass
die Kolbenringdichtung (7) einen weiteren Dichtungsring (9) der gleichen Art aufweist.
